# EUROPÄISCHE PATENTSCHRIFT

(11) **EP 3 490 374 B1**
(45) Veröffentlichungstag und Bekanntmachung des Hinweises auf die Patenterteilung: **24.08.2022**
(21) Anmeldenummer: 17752278.6
(22) Anmeldetag: 28.07.2017
(51) Int. Cl.: A01K 85/16, A01K 85/01, A01K 97/04

(54) **KÖDERFISCH MIT EINER KÖDERANTRIEBSEINHEIT**
BAIT FISH HAVING A BAIT DRIVE UNIT
POISSON APPÂT DOTÉ D'UNE UNITÉ D'ENTRAÎNEMENT D'APPÂT

(30) Priorität: 01.08.2016 DE 102016114223
(43) Veröffentlichungstag der Anmeldung: 05.06.2019
(73) Patentinhaber: Portrat, Olivier, 66117 Saarbrücken (DE)
(72) Erfinder: Portrat, Olivier, 66117 Saarbrücken (DE)
(74) Vertreter: Patentanwaltskanzlei Vièl & Wieske PartGmbB
(86) Internationale Anmeldenummer: PCT/DE2017/100632
(87) Internationale Veröffentlichungsnummer: WO 2018/024288

(56) Entgegenhaltungen:
- US-A- 3 085 361
- US-B2- 8 950 105

## Beschreibung

Die Erfindung betrifft einen Köderfisch mit einer Köderantriebseinheit.

Der beste Köder zum Angeln auf Raubfische ist der lebende Köderfisch. Dies beruht darauf, dass er, wenn er am Haken befestigt ist, in seinen Bewegungen eingeschränkt ist. Diese Einschränkung der Bewegungen lässt den Köderfisch krank und geschwächt wirken, was für Raubfische einen Anreiz bietet, die Beute mit geringem Aufwand zu erlegen.

Aus ethischen und tierschutzrechtlichen Gründen ist bzw. wird der lebende Köderfisch jedoch in immer mehr Ländern verboten. Darüber hinaus sind lebende Köderfische nicht immer und überall erhältlich.

Deshalb wurden Kunstköder in Fischgestalt in verschiedenen Ausführungsformen entwickelt, beispielsweise als Wobbler, Blinker oder Pilker.

Diese Kunstköder nehmen bereits einen wichtigen Platz in der Raubfischangelei ein. Die Kunstköder sind derart ausgestaltet, dass sie beim Zug durch das Wasser die Bewegung eines Fisches nachahmen. Der Zug durch das Wasser wird durch das Einholen der Angelschnur erreicht; in den meisten Fällen mit Hilfe der an der Angel befindlichen Rolle. Erst durch dieses Einholen wird Druck auf eine Tauchschaufel (Wobbler), auf ein Metallblatt (Spinner) oder Dergleichen ausgeübt, wodurch der Kunstköder in seitliche bzw. in rotierende Bewegungen versetzt wird. Nachteilig bei allen Kunstködern ist jedoch, dass sie vom Angler eingeholt werden müssen, was wiederum dazu führt, dass sie nicht bei den Raubfischen verbleiben, sondern von diesen weggezogen werden. Entfernt sich der Köder jedoch von dem Raubfisch weg, wird der Fangreiz begrenzt, da ein derartiger Kunstköder dann nicht geschwächt auf den Raubfisch wirkt. Würde ein Raubfisch den Kunstköder jagen wollen, so müsste er die Verfolgung aufnehmen. Es kommt weiterhin erschwerend hinzu, dass die von den Kunstködern ausgeführten Bewegungen nicht ausreichend naturgetreu sind, d.h. die typischen zappeligen und unregelmäßigen Bewegungen eines kranken oder verletzten Fisches können nicht simuliert werden. Gerade beim Angeln auf größere Raubfische, deren Erkennungsvermögen sehr hoch sein kann, ist es schwer, diese durch die genannten Kunstköder zu überlisten.

Um zu erreichen, dass die Kunstköder in einem gewünschten Bereich verbleiben können und somit nicht durch den Angler mit Zug bewegt werden müssen, wurden künstliche Köderfische entwickelt, die einen Antrieb aufweisen, der die künstlichen Köderfische in Bewegung versetzt.

Aus der US 8 950 105 B2 ist ein Köderfisch mit einer Köderantriebseinheit bekannt. Diese Köderantriebseinheit weist eine elektromotorische Antriebseinheit mit einer Ansteuerungselektronik auf. Diese beiden Bauteile sind in der Köderantriebseinheit in einem wasserdichten Gehäuse angeordnet. Von der elektromotorischen Antriebseinheit geht eine Welle ab, die von der elektromotorischen Antriebseinheit angetrieben wird. Diese Welle weist einen Nocken auf, der in einer Bohrung einer in seitlicher Richtung beweglich gelagerten Schwanzflosse gelagert ist. Durch ein Hin- und Herbewegen der Welle und damit auch des Nockens wird die Schwanzflosse des Köderfisches in seitlicher Richtung hin- und herbewegt. Aus der US 3 085 361 A ist ein Köderfisch bekannt, bei dem eine Batterie wasserdicht in einem Schwimmer untergebracht ist. Von dort ausgehend führt ein Stromversorgungskabel zu einer elektromotorischen Antriebseinheit im Inneren des Köderfisches. Von der elektromotorischen Antriebseinheit geht eine Welle ab, die von der elektromotorischen Antriebseinheit angetrieben wird. Diese Welle kann in einem ersten Teilstück teilweise frei in dem Köderfisch drehen und ist in einem Teil dieses ersten Teilstücks drehbar gelagert, so dass die Längsrichtung der Welle konstant bleibt. Das zweite (hintere) Teilstück dieser Welle ist abgewinkelt und in einem Längsschlitz im Inneren der Schwanzflosse des Köderfisches geführt. Bei einer Drehung der Welle über die elektromotorische Antriebseinheit soll damit die Schwanzflosse des Köderfisches in seitlicher Richtung hin- und herbewegt werden. Eine Auslenkung in vertikaler Richtung soll damit nicht stattfinden.

Bei diesen beiden Entgegenhaltungen geht es darum, in einer Annäherung einen lebenden Fisch zu simulieren.

Beispielsweise offenbart die DE 197 22 368 A1 einen künstlichen Köderfisch mit einer beweglichen, mit dem Köderfischkörper verbundenen Schwanzflosse, wobei die Schwanzflosse über zwei Zugelemente, die von einem Antrieb abwechselnd angezogen werden, hin und her bewegt wird.

Die DE 39 21 156 A1 offenbart einen künstlichen Köder, der einen Antrieb aufweist, durch den ein Vortrieb mittels einer rotierenden Flosse und/oder eines Propellers erzeugt wird.

Die DE 202 01 645 U1 offenbart einen Köder, der aus zueinander beweglichen oder elastischen Abschnitten besteht. Der Köder ist mit einem Motor versehen, über den die Abschnitte relativ zueinander in Bewegung versetzen werden können. Der Motor kann über eine Achse entweder eine Drehbewegung auf den Körper ausüben, durch exzentrisch auf der Achse angeordnete Gewichte den Körper in Vibration versetzen oder über die Achse eine Spirale drehen, so dass sich der Körper des Köders verwindet.

Es ist daher die Aufgabe der Erfindung, einen Köderfisch mit einer Köderantriebseinheit bereitzustellen, mit dem noch wirksamer die Bewegungen eines "kranken" Köderfisches imitiert und damit eine noch höhere Ausbeute beim Angeln erreicht werden kann.

Die Aufgabe der Erfindung wird durch einen Köderfisch mit einer Köderantriebseinheit gelöst. Die Köderantriebseinheit weist einen Energiespeicher auf, eine elektromotorische Antriebsvorrichtung und eine über die elektromotorische Antriebsvorrichtung antreibbare Welle. Die Welle ist derart gekrümmt, dass bei einer Projektion in eine Ebene die Krümmung der Welle keine Änderung des Vorzeichens erfährt. Die elektromotorische Antriebsvorrichtung ist drehfestgelagert in dem Körper des Köderfisches angeordnet. Nach der vorliegenden Erfindung ist die antreibbare Welle drehbar in einem Kanal des elastischen Körpers des Köderfischs geführt. Der Körper des Köderfisches besteht zumindest in dem Bereich, in dem die durch die elektromotorische Antriebsvorrichtung antreibbare Welle in dem Köderfisch geführt ist, aus einem elastischen Material. Das elastische Material weist eine größere Biegeelastizität auf als die Welle. Die antreibbare Welle ist in dem Köderfisch derart geführt, dass eine Bewegung der in dem Köderfisch geführten Welle auf das elastische Material übertragen wird.

Der Köderfisch kann erfindungsgemäß ein künstlicher Köderfisch oder ein toter Fisch sein.

Ist der Köderfisch ein künstlicher Köderfisch, ist vorgesehen, dass der Körper des künstlichen Köderfisches zumindest in dem Bereich, in dem die mit der elektromotorischen Antriebsvorrichtung verbundene Welle angeordnet ist, aus elastischem Material besteht. Als elastisches Material können alle Materialien verwendet werden, die der Bewegung der Welle folgen können, ohne zu zerreißen. Insbesondere Gummi, Plastik, insbesondere Weichplastik, Silikon, Latex oder Dergleichen sind erfindungsgemäß als Material vorgesehen. Weiterhin ist für den künstlichen Köderfisch vorgesehen, dass zumindest die elektromotorische Antriebsvorrichtung drehfestgelagert in dem Körper angeordnet ist. Dies kann beispielsweise dadurch erfolgen, dass die elektromotorische Antriebsvorrichtung in einen Fischkörper aus Kunststoff eingegossen wird.

Der Grad der erforderlichen Elastizität des Köderfisches hängt zum einen von der Biegefestigkeit der Welle ab, dem Antriebsmoment der elektromotorischen Antriebsvorrichtung und der Materialdicke des Köderfisches in dem Bereich, der verformt werden soll.

Der Kanal, in dem die Welle geführt ist, kann beispielsweise dadurch ausgebildet werden, dass nach dem Eingießen an dem elastischen Material gezogen wird, so dass dieses von der Welle abreißt. Ebenfalls ist vorstellbar, dass der Kanal durch Einschieben oder Reinpressen der Welle in den elastischen Körper gebildet wird. Insbesondere das Einschieben der Welle in einen Köderfisch hat den Vorteil, dass der Angler die Köderantriebseinheit selbst in einen Köderfisch einschieben kann. Dies kann notwendig sein, wenn ein Köderfisch zerstört wurde oder - bei einem toten Fisch - zu alt wurde. Die Köderantriebseinheit kann wiederverwendet werden.

Ist jedoch die Welle bereits beweglich in einer wasserdichten Hülle angeordnet, kann die elektromotorische Antriebsvorrichtung ein Motor, z.B. Gleichstrommotor, sein, der ein kontinuierliches Drehen der Welle in eine Richtung erlaubt. Da die Hülle im Bereich der Welle elastisch ist und die Welle in der Hülle rotieren kann und der Körper des künstlichen Köderfisches zumindest in dem Bereich, in dem die mit der elektromotorischen Antriebsvorrichtung verbundene Welle angeordnet ist, aus elastischem Material besteht, wird ein Reißen der Hülle und des Körpers verhindert. Bei einem Rotieren der Welle folgt die Biegung des Köderfisches wegen dessen Elastizität in dem Bereich, in dem die Welle gelagert ist, der Biegung der Welle entsprechend der momentanen Winkelposition der Welle. Da die Welle in ihrer Außenfläche nicht mit der Hülle bzw. dem Kanal verbunden ist, wird der Köderfisch dabei nicht aufgewickelt.

Der Köderfisch kann ebenfalls ein toter Fisch sein, in dem die Köderantriebseinheit angeordnet ist bzw. angeordnet werden kann.

Die Köderantriebseinheit kann beispielsweise durch das Maul des toten Fisches oder einen Schnitt im Kopfbereich mit dem Wellenende voraus in den toten, jedoch elastischen Körper, eingeschoben werden.

Die Köderantriebseinheit ist wie folgt aufgebaut. Die durch den Energiespeicher mit Strom versorgte elektromotorische Antriebsvorrichtung kann ein Motor, z.B. Gleichstrommotor, zum kontinuierlichen Drehen der Welle in eine Richtung oder ein drehrichtungsansteuerbarer Motor zum Umkehren der Drehrichtung der Welle zuerst in eine Richtung und dann in die entgegengesetzte Richtung sein.

Der Energiespeicher kann im einfachsten Fall eine Batterie sein. Ebenso kann der Energiespeicher ein wiederaufladbarer Akkumulator sein.

Die Welle wird durch die elektromotorische Antriebsvorrichtung um eine Drehachse gedreht. Im Rahmen dieser Erfindung ist diese Drehachse so definiert, dass sich die Drehachse als Gerade in Abtriebsrichtung von der Antriebsvorrichtung erstreckt. Die Orientierung der Welle stimmt in dem Bereich, in dem die Welle an der Antriebvorrichtung befestigt ist, mit der Orientierung der Drehachse überein. Im weiteren Verlauf ist die Welle gekrümmt.

Die Welle ist derart ausgestaltet, dass das von der elektromotorischen Antriebsvorrichtung abgewandte Ende radial von der (virtuell verlängerten) Drehachse beabstandet ist.

Damit das Ende der Welle radial zu der Drehachse beabstandet sein kann, ist beispielsweise vorgesehen, dass die Welle ausgehend von der elektromotorischen Antriebsvorrichtung eine Krümmung aufweist.

Durch die Krümmung der Welle in einem von der elektromotorischen Antriebsvorrichtung abgewandten Bereich wird erreicht, dass die Welle in dem gekrümmten Bereich radial um die Drehachse rotiert (bei kontinuierlichem Drehen der Welle in eine Richtung) oder hin und her rotiert (bei drehrichtungsansteuerbarem Motor zum Umkehren der Drehrichtung der Welle).

Die Krümmung der Welle ist derart ausgestaltet, dass diese, ausgehend von der elektromotorischen Antriebsvorrichtung, bei einer Projektion in eine Ebene keine Änderung des Vorzeichens erfährt.

Dies kann beispielsweise in einem von der motorischen Antriebseinheit abgewandten Bereich der Welle durch eine Rechtskrümmung oder Linkskrümmung der Welle erfolgen (wenn die Krümmung in einer Ebene erfolgt). Das von der elektromotorischen Antriebsvorrichtung abgewandte Ende der Welle ist damit radial von der (virtuell verlängerten) Drehachse beabstandet.

Ebenso kann die Welle auch dreidimensional (3D-) gekrümmt sein, indem diese kombiniert zu der Links- bzw. Rechtskrümmung eine Krümmung aus der Ebene heraus nach oben oder unten erfährt. Auch diese Krümmung ist so ausgeführt - d.h. begrenzt -, dass diese Krümmung bei Projektion der Welle in eine Ebene - beispielsweise die horizontale Ebene - keine Änderung des Vorzeichens erfährt. Eine Projektion der Welle in eine Ebene kann beispielsweise der Projektion eines Viertelkreises einer Spirale entsprechen.

Um ein Einbringen der Köderantriebseinheit in einen Köderfisch zu erleichtern, ist vorteilhaft vorgesehen, dass die Krümmung der Welle über die Länge der Welle konstant ist.

Durch diese Ausgestaltung wird das nachträgliche Einbringen der Köderantriebseinheit in einen Köderfisch vereinfacht, da diese mit dem der Antriebseinheit abgewandten Ende voraus in den Köderfisch eingeschoben werden kann. Das Einbringen kann dann mit einer Schubund Drehbewegung erfolgen.

Abhängig vom Grad der Krümmung der Welle fällt der Radius der Kreisbogenbewegung (drehrichtungsansteuerbarer Motor zum Umkehren der Drehrichtung) oder Kreisbewegung (Gleichstrommotor, zum kontinuierlichen Drehen der Welle in eine Richtung) des von der elektromotorischen Antriebsvorrichtung abgewandten Endes der Welle um die Drehachse aus. Bei einer stärkeren Krümmung ist das von der elektromotorischen Antriebsvorrichtung abgewandte Ende der Welle weiter von der Drehachse beabstandet als bei einer schwächeren Krümmung. Dementsprechend ist die Bewegung der Köderantriebseinheit mit einer stärkeren Krümmung größer als mit einer schwächeren Krümmung.

Es ist weiterhin vorgesehen, dass das von der elektromotorischen Antriebsvorrichtung abgewandte Ende der Welle als Spitze bzw. Dorn ausgestaltet ist, so dass diese Spitze bzw. Dorn bis in den Schwanzbereich eines künstlichen Köderfisches bzw. bis in die Schwanzwurzel eines toten Köderfisches geschoben bzw. gesteckt werden kann. Die Spitze kann damit als Aufhängpunkt bzw. als Auflagepunkt oder Fixierpunkt dienen.

Um ein Rotieren der Köderantriebseinheit um die eigene Achse innerhalb des Köderfisches zu vermeiden, ist weiterhin vorgesehen, dass wenigstens die elektromotorische Antriebsvorrichtung der Köderantriebseinheit ein Befestigungsmittel, wie beispielsweise ein Stachel, ein Draht oder Dergleichen, aufweist, um die elektromotorische Antriebsvorrichtung in einem Köderfisch zu fixieren. Es ist vorgesehen, dass die Welle nicht durch Befestigungsmittel fixiert wird. Durch die Möglichkeit der Drehfestlagerung der Antriebsvorrichtung in einem Köderfisch, bei gleichzeitiger Rotierbarkeit der Welle wird erreicht, dass sich die Welle in dem Köderfisch dreht. Das dabei auftretende Drehmoment wird an dem Teil des Köderfisches abgestützt, in dem die elektromotorische Antriebsvorrichtung gelagert ist. Da dieser Teil des Köderfisches insbesondere wegen der elektromotorischen Antriebsvorrichtung ein wesentlich größeres Trägheitsmoment aufweist als der Teil des Köderfisches, in dem die Welle geführt ist, wirkt es bei einer Sicht von außen auf den Köderfisch so, als würde sich im Wesentlichen nur der Teil bewegen, in dem die Welle geführt ist. Dieser Bewegungsablauf entspricht vergleichsweise naturgetreu dem Bewegungsmuster eines Fisches.

Da sich kranke Fische unregelmäßig bewegen, ist weiterhin gemäß Anspruch 2 zu der Erfindung gehörig, dass die Köderantriebseinheit eine Steuerungseinrichtung aufweist, die eine zeitlich einstellbare Verzögerung, Unterbrechung, Tempoänderung oder zufällige An/Aus-Schaltung der elektromotorischen Antriebsvorrichtung und damit der Wellendrehung erzeugt. Ebenso ist vorstellbar, dass die Steuerungseinrichtung eine Kombination der vorgenannten Handlungen erzeugt. Hierdurch wird eine unregelmäßige Bewegung bzw. ein unregelmäßiges Zappeln des Körpers erreicht, was wiederum einen besonders großen Täuschungseffekt auf die Raubfische ausübt, da diese einen verletzten Köderfisch wahrnehmen.

Im Falle, dass die Köderantriebseinheit eine Steuerungseinrichtung aufweist, ist weiterhin gemäß Anspruch 3 vorteilhaft vorgesehen, dass die Steuerungseinrichtung ein Speicherelement und/oder eine Datensendeeinheit und/oder eine Datenempfangseinheit aufweist.

Die Verwendung des Speicherelements ermöglicht eine Programmierung der Steuerungseinrichtung, die wiederum die elektromotorische Antriebsvorrichtung steuert und damit die Welle antreibt. Die auf dem Speicherelement hinterlegten Programme können bereits durch den Hersteller auf dem Speicherelement vorprogrammiert sein. Ebenso können anwenderspezifische Programme, die auf spezielle Anwendungen ausgerichtet sind, selbstständig durch den Anwender über die Datenempfangseinheit auf das Speicherelement übertragen werden. Eine Datensendeeinheit ermöglicht, während dem Einsatz der Köderantriebseinheit gespeicherte Ereignisse später mittels einer Datenverarbeitungseinrichtungen (Mobiltelefon, Smartphone, Tablet Computer, tragbarer Rechner, eine Arbeitsstation oder ein Serverrechner) auszuwerten.

Damit stehen vielfältige Anwendungsmöglichkeiten zur Verfügung wie z.B. die Bearbeitung von Programmen mit eigenen Bewegungsmustern, der Vergleich der Benutzung einzelner Anwender, die Einstellung und der Austausch von Benutzerprofilen, die Bewertung von Programmen und Mustern und damit ein besseres Eingehen auf Kundenwünsche und dergleichen mehr.

Beispielsweise kann die Köderantriebseinheit weiterhin einen Kraftsensor aufweisen, der die Bissstärke eines Raubfisches feststellt. Ebenso kann die Köderantriebseinheit einen Temperatursensor aufweisen. Derartige Daten können auf dem Speicherelement gespeichert werden.

Auf dem Speicherelement kann ebenfalls hinterlegt sein, dass die elektromotorische Antriebsvorrichtung außer Betrieb gesetzt wird, sollte der Kraftsensor einen Biss eines Raubfisches wahrnehmen, der eine voreingestellte Mindeststärke überschreitet.

Vorteilhafterweise ist gemäß Anspruch 4 weiterhin vorgesehen, dass die Datensendeeinheit und/oder die Datenempfangseinheit für eine drahtlose Datenkommunikation ausgelegt sind.

Durch diese Ausgestaltung ist die Köderantriebeinheit von einer entfernten Datenverarbeitungseinrichtung fernsteuerbar. Sobald der Funktionszustand der Köderantriebeinheit derart ist, dass die drahtlose Datenkommunikationsverbindung arbeitet, d.h. auf Anfragen von einem entfernten Gerät reagiert, sind alle Funktionen der Köderantriebeinheit über diese drahtlose Verbindung fernsteuerbar, z.B. auch über das Internet. Auch ein Datenaustausch von Programmen und Nutzerdaten ist möglich.

Vorteilhafterweise ist die drahtlose Datenkommunikation als Bluetooth-, WLAN- oder NFC-Modul oder als Mobilfunkmodul nach GPRS, 3G oder LTE Standard ausgebildet. Diese Standards sind mittlerweile ausgereifte Übertragungssysteme, die mit den meisten Smartphones und Mobiltelefonen verfügbar sind, wobei sie ausreichend hohe Datenübertragungsraten bereitstellen. Dadurch lässt sich zu den meisten Datenverarbeitungseinrichtungen eine drahtlose Verbindung aufbauen, wobei die übermittelten Daten dann direkt in der Datenverarbeitungseinrichtung verarbeitet werden können.

Vorteilhaft kann gemäß Anspruch 5 weiterhin zu der Erfindung gehören, dass die Köderantriebseinheit ein mechanisches Schaltelement und/oder ein berührungsloses Schaltelement aufweist.

Im einfachsten Fall ist der Schalter derart eingerichtet, dass er die elektromotorische Antriebvorrichtung der Köderantriebeinheit ein- und ausschalten kann.

Die Schalter können aber auch so eingerichtet sein, dass sie neben der Inbetriebnahme der Köderantriebeinheit eine Mehrzahl von Funktionszuständen der Köderantriebseinheit aktivieren können. Ein mechanisches Schaltelement könnte beispielsweise ein manueller Schalter sein, der verschiedene Einstellmöglichkeiten aufweist, die wiederum verschiedene Programme starten. Wird als berührungsloses Schaltelement beispielsweise ein Magnetschalter verwendet, kann durch die Länge der Anhaltdauer das Programm ausgewählt werden, welches ausgeführt werden soll (Startprogramm, Bewegungsprogramm 1, Bewegungsprogramm 2, .., Stoppprogramm). Ebenso kann das berührungslose Schaltelement derart eingerichtet sein, dass es über eine drahtlose Datenkommunikationsverbindung in einen aktiven Betriebszustand versetzt werden kann.

Vorteilhafterweise sind die Steuerungseinrichtung, das Speicherelement, das berührungslose Schaltelement und optional die drahtlose Datenkommunikationsverbindung (Datensendeeinheit und/oder die Datenempfangseinheit) auf einer Platine angeordnet. Damit ergeben sich eine Platzersparnis, eine Stromersparnis und damit auch eine Kostenersparnis für die gesamte Köderantriebeinheit.

Da Batterien oder Akkumulatoren nach Leistungsabgabe ausgetauscht oder zum Wiederaufladen entnommen werden müssen, was unter anderem eine fehlerhafte Bedienung begünstigt, sieht eine vorteilhafte Ausgestaltung der Erfindung gemäß Anspruch 6 weiterhin vor, dass der Energiespeicher ein durch eine Ladeeinheit ladbarer Akkumulator ist, der kontaktlos aufladbar ist.

Durch diese Ausgestaltung wird ein Aufladen von Akkumulatoren über elektrische Kontakte vermieden. Dies hat Vorteile hinsichtlich der Kurzschlussfestigkeit und der Korrosion eventueller elektrischer Kontakte. Durch die kontaktfreie Aufladung kann der Akkumulator wasserfest umhüllt werden. Das kontaktlose Aufladen kann durch bekannte Verfahren und Vorrichtungen, die beispielsweise bereits in der Mobilfunkbranche genutzt werden, sowohl durch induktive als auch durch kapazitive Energieübertragung erfolgen.

Da Licht an einem Köder die Aufmerksamkeit der Raubfische erweckt, ist weiterhin gemäß Anspruch 7 vorteilhaft für die Erfindung vorgesehen, dass die Köderantriebseinheit wenigstens eine als Leuchtdiode bzw. LED ausgebildete Lichtquelle aufweist.

Die Lichtquelle kann über Kabel mit dem Energiespeicher verbunden sein. Durch die Kabelverbindung kann das Licht von der Lichtquelle zu dem gewünschten Leuchtbereich (z.B. die Augen eines Köderfisches) geführt werden. Ebenso ist vorstellbar, dass über die Steuerungseinrichtung ein Lichtmusterprogramm das Ein- und Ausschalten oder Dimmen der Lichtquelle steuert. Die Lichtquelle kann ebenfalls auf der oben beschriebenen Platine angeordnet sein. Alternativ kann das Licht von der Lichtquelle über einen Lichtleiter, z.B. eine Glasfaser oder POF (Polymer optische Faser) zu dem gewünschten Leuchtbereich (z.B. die Augen eines Köderfisches) geführt werden.

Es ist weiterhin gemäß Anspruch 8 zu der Erfindung gehörig, dass zumindest der Energiespeicher und die elektromotorische Antriebsvorrichtung in einer wasserdichten bzw. flüssigkeitsfesten Hülle angeordnet sind.

Die Hülle kann aus Kunststoff, Plexiglas, Glas, Metall oder Dergleichen sein. Im Falle, dass die Hülle aus Kunststoff besteht, kann sie elastisch, thermoelastisch (z.B. ein Schrumpfschlauch) oder unelastisch sein. Weiterhin kann die Hülle durchsichtig sein oder durch Farbpigmentzugabe teildurchsichtig oder undurchsichtig sein.

Es ist wichtig, dass zumindest der Energiespeicher und die elektromotorische Antriebsvorrichtung durch die Hülle vor Kontakt mit Wasser geschützt sind. Vorteilhaft ist hierbei vorgesehen, dass der Energiespeicher und die elektromotorische Antriebsvorrichtung drehfestgelagert in der Hülle angeordnet sind. Die drehbar gelagerte Welle kann derart mit der Antriebsvorrichtung verbunden sein, dass kein Wasser zu der Antriebsvorrichtung oder dem Energiespeicher gelangt. Die Welle kann vergleichbar der Lagerung der Welle eines Schiffpropellers gelagert sein, die über eine Stopfbuchse aus dem Schiffsrumpf herausgeführt ist. Die Welle wird über die Stopfbuchse abgedichtet, ist aber dennoch drehbar.

Durch diese Ausgestaltung der Erfindung wird ermöglicht, dass die Köderantriebseinheit in einen toten Fisch eingebaut werden kann, ohne dass es zu Kurzschlüssen oder Korrosion kommt.

Weiterhin ist vorstellbar, dass alle wasserempfindlichen Bauteile in der Hülle angeordnet sind. Alle wasserempfindlichen Bauteile liegen dann sicher geschützt in der Hülle.

Es ist ebenfalls vorstellbar, dass die Welle ebenfalls in der Hülle angeordnet ist. Hierbei ist jedoch vorgesehen, dass die Hülle zumindest im Bereich der Krümmung der Welle aus einem elastischen Material besteht. Bei dieser Ausgestaltung kann die Welle ohne weitere Schutzmaßnahmen gegen Wassereintritt in die Antriebsvorrichtung angetrieben werden.

Ist die Hülle über die gesamte Länge der Welle fest mit der Welle verbunden, ist vorgesehen, dass die elektromotorische Antriebsvorrichtung ein drehrichtungsansteuerbarer Motor zum Umkehren der Drehrichtung der Welle zuerst in eine Richtung (beispielsweise +120°) und dann in die entgegengesetzte Richtung (beispielsweise -120°) ist. Hierbei sollte die Drehung derart ausgelegt sein, dass die Elastizitätsgrenze der Hülle nicht überschritten wird und diese nicht abreißt. Für das Umkehren der Drehrichtung ist vorgesehen, dass der drehrichtungsansteuerbare Motor zum Umkehren der Drehrichtung der Welle zuerst um einen vordefinierte Grad in eine Richtung (beispielsweise bis zu ggf. +180°, vorzugsweise bis zu +90°, besonders bevorzugt zwischen +30° und +45°) und dann um denselben Grad in die entgegengesetzte Richtung (beispielsweise bis zu ggf. -180°, vorzugsweise bis zu -90°, besonders bevorzugt zwischen -30° und -45°) dreht.

Es ist weiterhin vorgesehen, dass die Welle beweglich in der Hülle angeordnet ist. Da die Hülle im Bereich der Welle elastisch ist und die Welle in der Hülle rotieren kann, kann die elektromotorische Antriebsvorrichtung ein Motor, z.B. Gleichstrommotor, sein, der ein kontinuierliches Drehen der Welle in eine Richtung erlaubt. Bei dieser Ausgestaltung ist die Welle in der Hülle drehbar. Das bedeutet, dass die Hülle bei einer Drehung der Welle nicht aufgewickelt wird.

Eine Ausgestaltung der Erfindung sieht weiterhin vor, dass in der wasserdichten bzw. flüssigkeitsfesten Hülle ebenfalls eine Trockenpatrone angeordnet ist, die möglicherweise vorhandene Restfeuchtigkeit oder eindringende Feuchtigkeit aufnimmt. Dadurch wird die Köderantriebseinheit vor Korrosion und Ausfall geschützt.

Eine weitere Ausgestaltung der Erfindung sieht vor, dass in der wasserdichten bzw. flüssigkeitsfesten Hülle eine Katalysatorpatrone angeordnet ist, die den beim Lade- und Entladevorgängen von Akkumulatoren entstehenden Wasserstoff aufnimmt und diesen umwandelt. Dadurch wird die Entstehung von Knallgas verhindert.

Nachfolgend wird die Erfindung anhand von schematischen Figuren näher erläutert. Es zeigen
- Fig. 1: einen schematischen Querschnitt einer Köderantriebseinheit mit einem Energiespeicher, einer elektromotorischen Antriebseinheit und einer über die elektromotorische Antriebseinheit antreibbaren gekrümmten Welle,
- Fig. 2: einen schematischen Querschnitt einer Köderantriebseinheit mit einem Energiespeicher, einer elektromotorischen Antriebseinheit, einer über die elektromotorische Antriebseinheit antreibbaren, gekrümmten Welle und einer Steuerungseinrichtung,
- Fig. 3: einen schematischen Querschnitt einer Köderantriebseinheit mit einem Energiespeicher, einer elektromotorischen Antriebseinheit, einer über die elektromotorische Antriebseinheit antreibbaren gekrümmten Welle, einer Steuerungseinrichtung und einer Hülle, die die vorgenannten Bauteile wasserfest einschließt,
- Fig. 4: einen schematischen Querschnitt eines Köderfisches mit einer Köderantriebseinheit, wobei die Köderantriebseinheit eine angetriebene gekrümmte Welle aufweist,
- Fig. 5: einen schematischen Querschnitt des Köderfisches mit einer Köderantriebseinheit aus Figur 4, wobei die angetriebene gekrümmte Welle um etwa 90° gedreht ist,
- Fig. 6: einen schematischen Querschnitt des Köderfisches mit einer Köderantriebseinheit aus Figur 5, wobei die angetriebene gekrümmte Welle um etwa 90° weitergedreht ist und
- Fig. 7: einen schematischen Querschnitt des Köderfisches mit einer Köderantriebseinheit aus Figur 6, wobei die angetriebene gekrümmte Welle um etwa 90° weitergedreht ist.

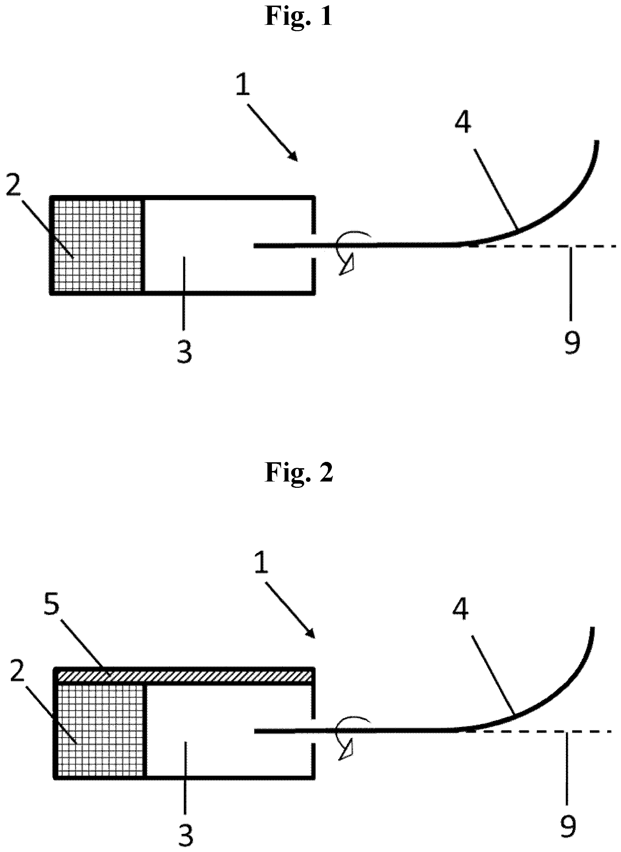

In Fig. 1 ist eine Köderantriebseinheit (1), insbesondere zum Einbau in einen Köderfisch, mit einem Energiespeicher (2), einer elektromotorischen Antriebsvorrichtung (3) und einer über die elektromotorische Antriebsvorrichtung (3) antreibbaren Welle (4) gezeigt. Der Energiespeicher (2) kann eine Batterie oder ein wiederaufladbarer Akkumulator sein. Die durch den Energiespeicher (2) mit Strom versorgte elektromotorische Antriebsvorrichtung (3) kann ein Motor, z.B. Gleichstrommotor, zum kontinuierlichen Drehen der Welle (4) in eine Richtung oder ein drehrichtungsansteuerbarer Motor zum Umkehren der Drehrichtung der Welle (4) zuerst in eine Richtung und dann in die entgegengesetzte Richtung sein. Die Welle (4) rotiert - wie dargestellt (s. Rotationspfeil) - durch den Antrieb der elektromotorischen Antriebsvorrichtung radial um die Drehachse (9) (bei kontinuierlichem Drehen der Welle in eine Richtung) oder hin und her (bei drehrichtungsansteuerbarem Motor zum Umkehren der Drehrichtung der Welle). Die Drehachse (9) ist als Gerade in Abtriebsrichtung von der Antriebsvorrichtung (3) dargestellt (s. gestrichelte Linie 9). Die Orientierung der Welle (4) stimmt dabei in dem Bereich, in dem die Welle (4) an der Antriebvorrichtung (3) befestigt ist, mit der Orientierung der Drehachse (9) überein. Wie dargestellt, ist die Welle (4) derart gekrümmt, dass bei einer Projektion in eine Ebene (beispielsweise durch die Schnittansichten der Figuren 1 bis 7 gezeigt) die Krümmung der Welle (4) keine Änderung des Vorzeichens erfährt. Die Krümmung der Welle (4) ist in dem dargestellten Beispiel konstant. Durch diese Ausgestaltung wird das nachträgliche Einbringen der Köderantriebseinheit (1) in einen Köderfisch vereinfacht, da diese mit dem der Antriebseinheit (2) abgewandten Ende voraus in den Köderfisch eingeschoben werden kann. Das Einbringen kann dann mit einer Schub- und Drehbewegung erfolgen.

In Fig. 2 ist die Köderantriebseinheit (1) aus Fig. 1 gezeigt, wobei die Köderantriebseinheit (1) eine Steuerungseinrichtung (5) aufweist, die eine zeitlich einstellbare Verzögerung, Unterbrechung, Tempoänderung oder zufällige An/Aus-Schaltung der elektromotorischen Antriebsvorrichtung (3) und damit der Wellendrehung erzeugen kann. Das Einsetzen der Köderantriebseinheit (1) mit der Steuerungseinrichtung (5) in einen Köderfisch bewirkt, dass ein unregelmäßiges Zappeln des Körpers des Köderfisches erreicht wird, was wiederum einen besonders großen Täuschungseffekt auf Raubfische ausübt, da diese einen verletzten Köderfisch wahrnehmen.

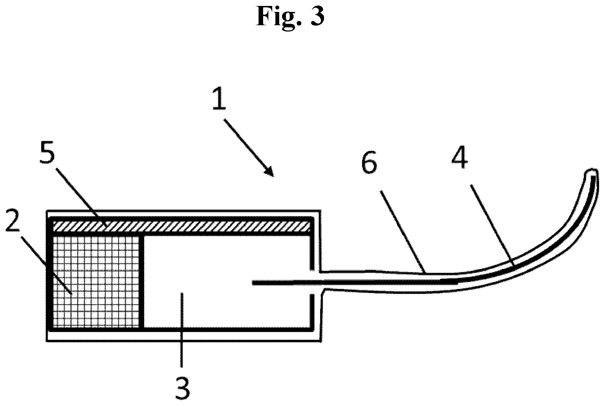

In Fig. 3 ist die Köderantriebseinheit (1) aus Fig. 2 gezeigt, wobei der Energiespeicher (2), die elektromotorische Antriebsvorrichtung (3), die Steuerungseinrichtung (5) sowie die Welle (4) in einer wasserdichten bzw. flüssigkeitsfesten Hülle (6) angeordnet sind. Die Hülle (6) besteht zumindest im Bereich der Krümmung der Welle (4) aus einem elastischen Material. Durch die dargestellte Ausgestaltung wird ermöglicht, dass die Köderantriebseinheit (1) in einen toten Fisch eingebaut werden kann, ohne dass es zu Kurzschlüssen oder Korrosion kommt.

Ist die Hülle über die gesamte Länge der Welle fest mit der Welle verbunden, ist vorgesehen, dass die elektromotorische Antriebsvorrichtung (3) ein drehrichtungsansteuerbarer Motor zum Umkehren der Drehrichtung der Welle (4) zuerst in eine Richtung (beispielsweise +120°) und dann in die entgegengesetzte Richtung (beispielsweise -120°) ist. Hierbei sollte die Drehung derart ausgelegt sein, dass die Elastizitätsgrenze der Hülle nicht überschritten wird und diese nicht abreißt. Für das Umkehren der Drehrichtung ist vorgesehen, dass der drehrichtungsansteuerbare Motor zum Umkehren der Drehrichtung der Welle zuerst um einen vordefinierten Grad in eine Richtung (beispielsweise bis zu ggf. +180°, vorzugsweise bis zu +90°, besonders bevorzugt zwischen +30° und +45°) und dann um denselben Grad in die entgegengesetzte Richtung (beispielsweise bis zu ggf. -180°, vorzugsweise bis zu -90°, besonders bevorzugt zwischen -30° und -45°) dreht.

Ebenso kann die Welle (4) beweglich in der Hülle (6) angeordnet sein. Da die Hülle (6) im Bereich der Welle (4) elastisch ist und die Welle (4) in der Hülle (6) rotieren kann, kann die elektromotorische Antriebsvorrichtung (3) ein Motor, z.B. Gleichstrommotor, sein, der ein kontinuierliches Drehen der Welle (4) in eine Richtung erlaubt. Bei letzterer Ausgestaltung ist die Welle (4) in der Hülle (6) drehbar. Das bedeutet, dass die Hülle (6) bei einer Drehung der Welle (4) nicht aufgewickelt wird.

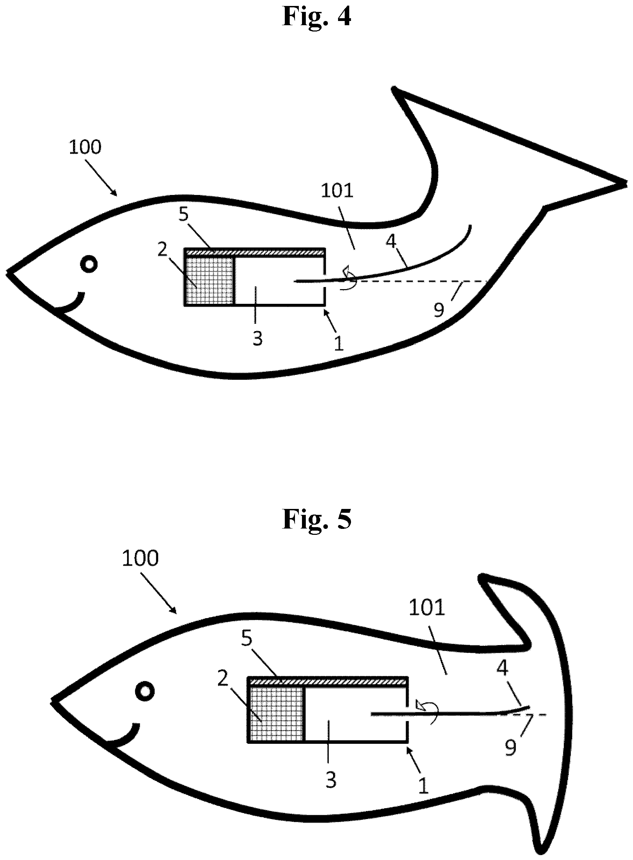

In den Figuren 4 bis 7 ist ein Köderfisch (100) mit einer Köderantriebseinheit (1) in verschiedenen Drehpositionen der Welle (4) im Schnitt gezeigt. Der Körper (101) des toten oder künstlichen Köderfisches (100) besteht zumindest in dem Bereich, in dem die durch die elektromotorische Antriebsvorrichtung (3) antreibbare Welle (4) in dem Köderfisch (100) geführt ist, aus einem elastischen Material. Das elastische Material weist eine größere Biegeelastizität auf als die Welle (4). Wie in den Figuren 4 bis 7 dargestellt, ist die antreibbare Welle (4) in dem Köderfisch (100) derart geführt, dass eine Bewegung der in dem Köderfisch (100) geführten Welle (4) auf den Körper (101) des Köderfisches (100) übertragen wird. In Fig. 4 zeigt das von der motorischen Antriebseinheit (3) abgewandte Ende der Welle (4) nach oben.

In Fig. 5 zeigt das von der motorischen Antriebseinheit (3) abgewandte Ende der Welle (4) nach hinten aus der Zeichnungsebene hinaus. Die Welle wurde demnach um ca. 90° gedreht.

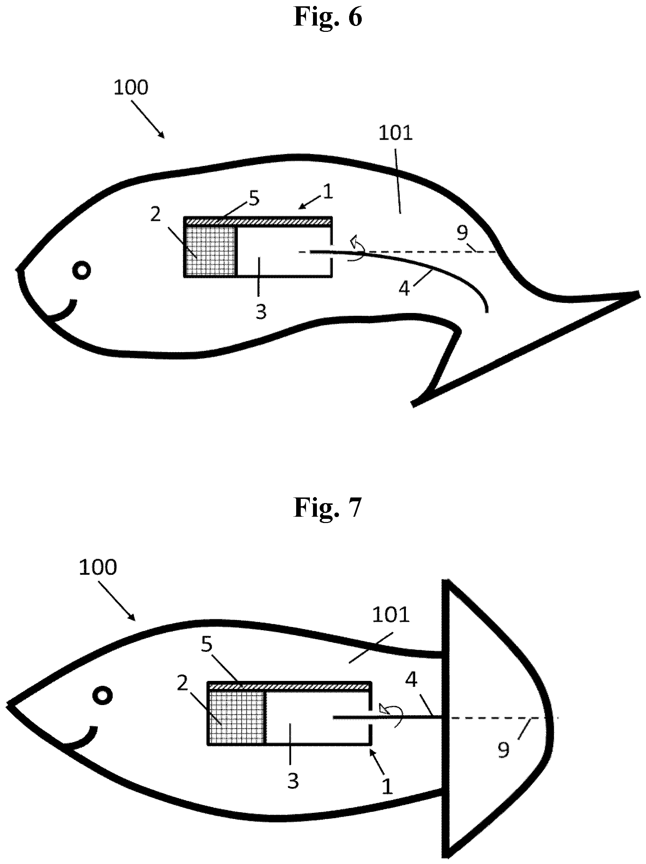

In Fig. 6 zeigt das von der motorischen Antriebseinheit (3) abgewandte Ende der Welle (4) nach unten. Die Welle wurde demnach gegenüber der Darstellung in Fig. 5 um ca. weitere 90° gedreht.

In Fig. 7 zeigt das von der motorischen Antriebseinheit (3) abgewandte Ende der Welle (4) nach vorne aus der Zeichnungsebene hinaus. Die Welle wurde demnach gegenüber der Darstellung in Fig. 6 um ca. weitere 90° gedreht.

Die elektromotorische Antriebsvorrichtung (3) ist drehfestgelagert in dem Körper (101) des Köderfisches (100) angeordnet. Durch die Drehfestlagerung der Antriebsvorrichtung (3) in dem Köderfisch bei gleichzeitiger Rotierbarkeit der Welle (4) wird erreicht, dass sich die Welle (4) in dem Köderfisch dreht. Das dabei auftretende Drehmoment wird an dem Teil des Köderfisches (100) abgestützt, in dem die elektromotorische Antriebsvorrichtung (3) gelagert ist. Da dieser Teil des Köderfisches (100) insbesondere wegen der elektromotorischen Antriebsvorrichtung (3) ein wesentlich größeres Trägheitsmoment aufweist als der Teil des Köderfisches (100), in dem die Welle (4) geführt ist, wirkt es bei einer Sicht von außen auf den Köderfisch (100) so, als würde sich im Wesentlichen nur der Teil bewegen, in dem die Welle (4) geführt ist. Dieser Bewegungsablauf entspricht vergleichsweise naturgetreu dem Bewegungsmuster eines zappelnden Fisches.

## Patentansprüche

1. Köderfisch (100) mit einer Köderantriebseinheit (1), wobei die Köderantriebseinheit aufweist:
➢ einen Energiespeicher (2),
➢ eine elektromotorischen Antriebsvorrichtung (3) und
➢ eine über die elektromotorische Antriebsvorrichtung (3) antreibbare Welle (4),
➢ wobei die Welle (4) derart gekrümmt ist, dass bei einer Projektion in eine Ebene die Krümmung der Welle (4) keine Änderung des Vorzeichens erfährt,
➢ wobei die elektromotorische Antriebsvorrichtung (3) drehfestgelagert in dem Körper (101) des Köderfisches (100) angeordnet ist,
➢ wobei der Körper (101) des Köderfisches (100) zumindest in dem Bereich, in dem die durch die elektromotorische Antriebsvorrichtung (3) antreibbare Welle (4) in dem Köderfisch (100) geführt ist, aus einem elastischen Material besteht,
> wobei das elastische Material eine größere Biegeelastizität aufweist als die Welle (4), und
➢ wobei die antreibbare Welle (4) in dem Köderfisch (100) derart geführt ist, dass eine Bewegung der in dem Köderfisch (100) geführten Welle (4) auf das elastische Material übertragen wird,
**dadurch gekennzeichnet**,
➢ dass die antreibbare Welle (4) drehbar in einem Kanal des elastischen Körpers des Köderfischs (100) geführt ist.

2. Köderfisch (100) gemäß Anspruch 1, **dadurch gekennzeichnet, dass** die Köderantriebseinheit (1) eine Steuerungseinrichtung (5) aufweist.

3. Köderfisch (100) gemäß Anspruch 2, **dadurch gekennzeichnet, dass** die Steuerungseinrichtung (5) ein Speicherelement und/oder eine Datensendeeinheit und/oder eine Datenempfangseinheit aufweist.

4. Köderfisch (100) gemäß Anspruch 3, **dadurch gekennzeichnet, dass** die Datensendeeinheit und/oder die Datenempfangseinheit für eine drahtlose Datenkommunikation ausgelegt sind.

5. Köderfisch (100) gemäß einem der Ansprüche 1 bis 4, **dadurch gekennzeichnet, dass** die Köderantriebseinheit (1) ein mechanisches Schaltelement und/oder ein berührungsloses Schaltelement aufweist.

6. Köderfisch (100) gemäß Anspruch 1, **dadurch gekennzeichnet, dass** der Energiespeicher (2) ein durch eine Ladeeinheit ladbarer Akkumulator ist, der kontaktlos aufladbar ist.

7. Köderfisch (100) gemäß Anspruch 1, **dadurch gekennzeichnet, dass** die Köderantriebseinheit (1) wenigstens eine als Leuchtdiode bzw. LED ausgebildete Lichtquelle aufweist.

8. Köderfisch (100) gemäß einem der vorhergehenden Ansprüche 1 bis 7, **dadurch gekennzeichnet, dass** zumindest der Energiespeicher (2) und die elektromotorische Antriebsvorrichtung (3) in einer wasserdichten Hülle (6) angeordnet sind.

## Claims

1. A bait fish having a bait drive unit (1), comprising:
> an energy storage device (2),
➢ an electromotive drive device (3),
➢ a shaft (4) drivable via the electromotive drive device (3),
> wherein the shaft (4) is curved such that when projected in a plane, the curvature of the shaft (4) does not undergo a change of sign,
> wherein the electromotive drive device (3) is mounted in a rotationally fixed manner in the body (101) of the bait fish (100),
➢ wherein the body (101) of the bait fish (100) consists of an elastic material at least in the region in which the shaft (4) drivable by the electromotive drive device (3) is guided in the bait fish (100),
➢ wherein the elastic material has a greater bending elasticity than the shaft (4), and
➢ wherein the drivable shaft (4) is guided in the bait fish (100) in such a way that a movement of the shaft (4) guided in the bait fish (100) is transmitted to the elastic material,
**characterized in**
➢ that the drivable shaft (4) is rotatably guided in a channel of the elastic body of the bait fish (100).

2. The bait fish (100) according to claim 1, **characterized in that** the bait drive unit (1) comprises a control device (5).

3. The bait fish (100) according to claim 2, **characterized in that** the control device (5) comprises a memory element and/or a data transmitting unit and/or a data receiving unit.

4. The bait fish (100) according to claim 3, **characterized in that** the data transmitting unit and/or the data receiving unit is/are designed for wireless data communication.

5. The bait fish (100) according to any one of claims 1 to 4, **characterized in that** the bait drive unit (1) comprises a mechanical switching element and/or a contactless switching element.

6. The bait fish (100) according to claim 1,
**characterized in that** the energy storage device (2) is an accumulator which can be charged by a charging unit and which can be charged without contact.

7. The bait fish (100) according to claim 1,
**characterized in that** the bait drive unit (1) has at least one light source configured as a light emitting diode or LED.

8. The bait fish (100) according to any one of the claims 1 to 7,
**characterized in that** at least the energy storage device (2) and the electromotive drive device (3) are arranged in s waterproof casing (6).

## Revendications

1. Poisson-appât (100) ayant une unité d'entraînement de l'appât (1), l'unité d'entraînement d'appât comprenant :
➢ une réserve d'énergie (2),
➢ un dispositif d'entraînement par moteur électrique (3) et
➢ un arbre (4) pouvant être entraîné par le dispositif d'entraînement par moteur électrique (3),
➢ l'arbre (4) étant incurvé de telle sorte que lorsqu'il est projeté dans un plan, la courbure de l'arbre (4) ne subit pas de changement de signe,
➢ le dispositif d'entraînement par moteur électrique (3) étant logé bloqué en rotation dans le corps (101) du poisson-appât (100),
➢ le corps (101) du poisson-appât (100) étant constitué d'un matériau élastique au moins dans la région dans laquelle l'arbre (4), qui peut être entraîné par le dispositif d'entraînement par moteur électrique (3), est guidé dans le poisson-appât (100),
➢ le matériau élastique ayant une plus grande élasticité en flexion que l'arbre (4), et
➢ l'arbre (4) pouvant être entraîné étant guidé dans le poisson-appât (100) de telle manière qu'un mouvement de l'arbre (4) guidé dans le poisson-appât (100) est transmis au matériau élastique,
**caractérisé en ce que** l'arbre (4) pouvant être entraîné est guidé rotatif dans un canal du corps élastique du poisson-appât (100).

2. Poisson-appât (100) selon la revendication 1, **caractérisé en ce que** l'unité d'entraînement de l'appât (1) comprend un dispositif de commande (5).

3. Poisson-appât (100) selon la revendication 2, **caractérisé en ce que** le dispositif de commande (5) comprend un élément de mémoire et/ou une unité de transmission de données et/ou une unité de réception de données.

4. Poisson-appât (100) selon la revendication 3, **caractérisé en ce que** l'unité de transmission de données et/ou l'unité de réception de données sont conçues pour la communication de données sans fil.

5. Poisson-appât (100) selon l'une des revendications 1 à 4, **caractérisé en ce que** l'unité d'entraînement de l'appât (1) comprend un élément de commutation mécanique et/ou un élément de commutation sans contact.

6. Poisson-appât (100) selon la revendication 1, **caractérisé en ce que** la réserve d'énergie (2) est un accumulateur qui peut être chargé par une unité de charge et qui peut être chargé sans contact.

7. Poisson-appât (100) selon la revendication 1, **caractérisé en ce que** l'unité d'entraînement de l'appât (1) comprend au moins une source de lumière sous la forme d'une diode électroluminescente ou LED.

8. Poisson-appât (100) selon l'une des revendications précédentes 1 à 7, **caractérisé en ce qu'**au moins la réserve d'énergie (2) et l'unité d'entraînement par moteur électrique (3) sont disposées dans une enveloppe étanche (6).
